# EUROPEAN PATENT APPLICATION

(11) **EP 4 318 017 A1**
(43) Date of publication of application: **07.02.2024**
(21) Application number: 22188470.3
(22) Date of filing: 03.08.2022
(51) Int. Cl.: G01S 1/02, G01S 5/02

(54) **APPARATUS FOR COLLECTING GROUND TRUTH DATA FOR A LOCALIZATION SYSTEM AND METHOD OF USING SUCH APPARATUS**

(71) Applicant: Siemens Aktiengesellschaft, 80333 München (DE)
(72) Inventor: Bröring, Arne, 81735 München (DE); Becher, Andre, 09376 Oelsnitz (DE)
(74) Representative: Siemens Patent Attorneys

(57) **Abstract**

A ground truth coordinates collection device, configured to assist in the optimization of a real-time location system, RTLS, based on the reception of signals from fixed signal transmitters such as RTLS anchors using UWB technology. The collection device comprises signal measurement means, configured to measure a plurality of signals from fixed signal transmitters at a time t and obtain corresponding signal information at the time t. The collection device also comprises a signal measuring means position determining means, configured to determine a physical position of the signal measuring means at time t and obtain therefrom position information of the signal measuring means in a location reference frame specific to the collection device at time t. Each of the forms of the collection device is configured to autonomously obtain a series of signal information and a corresponding series of position information of the signal measuring means, the series of position information of the signal measuring means comprising at least two information corresponding to at least two different physical positions of the measuring means. The purpose of these collection devices is to provide a means of carrying out a campaign of measurement points autonomously.

## Description

The present disclosure relates to the field of localization, and particularly to indoor localization. The present description discloses specially configured apparatus for collecting ground truth data for a localization system and method of using such apparatus to improve localization system, in particular indoor localization systems.

Over the last few years, many localization methods and systems have been implemented. The best known are based on the reception of satellite signals, for example from the GPS satellite constellation. Other approaches consist of signal triangulations, for example from cell phone relay antennas. These approaches have proven their efficiency in various domains, notably in the field of car driving. Nevertheless, they suffer from certain imperfections when obstacles create interference or block the signals. For example, when the area in which an object is to be located is located in a building (a building, a factory, a hospital, a hotel, a store, a train station or an airport, etc.) so that the satellite signal is not able to reach the object or so that the satellite signal cannot be received from inside the building. Also, in this type of enclosed space/indoor space, the presence of objects or walls create interference or shadow making the capture of a signal and its use for triangulation sometimes problematic.

There is a need for accurate and reliable indoor location systems using real-time locating systems (RTLS), especially for future applications in production facilities or commercial buildings. For example, in an automotive production site, the exact position of a drilling machine in relation to a vehicle being manufactured could be very useful in many industrial applications. For example, this data could be used as a parameter to allow the drill to be turned on only when it is close to the vehicle on which it is to be used. Many other industrial or commercial applications of this type can be envisaged. These approaches require very accurate and reliable localization systems, capable of being implemented in closed/covered spaces, and in which there are many objects that can interfere with the signal.

The most promising current approach to these RTLS is to use ultra-wide band (UWB) signals. In other words, the area in which the location solution is to be deployed includes a number of UWB anchors or gateways with fixed reference points. These UWB anchors receive a signal from a UWB tag or transponder to determine their position. This approach faces a significant problem in that the RTLS system requires a complex and laborious calibration step. Indeed, in order to proceed with this calibration during the installation of the UWB anchors, a specialized engineer must measure the reference points set for these anchors and install the hardware (network, etc.) that the RTLS needs. This hardware requires manual optimization. For example, to fine-tune the parameters (e.g., Kalman filter configuration) in order to proceed to localization via triangulation using a time difference of arrival. This optimization step requires substantial effort by a domain expert engineer who needs to move the tag from one position to another in order to ensure that the position is determined correctly in the system by manually comparing the physical positions and the positions as determined by the RTLS system. Between each of these movements of the transponder, the engineer must adjust the RTLS parameters in order to reduce the position error that may have been observed.

Different approaches have been implemented to solve this problem. One approach is the implementation of automated indoor mapping solutions, for example using Lidars on autonomous guided vehicles (AGVs). Such maps can be used as a basis for manual optimization. However, the optimization step of repeatedly moving the transponder to manually identify the position on a map and compare it to the position determined by the RTLS system is still necessary and requires the prolonged attention and effort of an engineer specialized in the field.

In other words, if the implementation of these indoor localization systems based on RTLS systems requires a calibration including an optimization phase at the time of their installation, the optimization phase which consists in manually having an installer verify the position determined by the system and compare it to a physical position remains necessary in the existing solutions. There is therefore still a need for a solution that facilitates or even automates this optimization phase following the mapping phase of the environment in which the localization system is to be implemented in order to considerably lighten the calibration phase.

The proposed solution consists in the use of a device specially developed to allow the rapid and accurate collection of ground truth data allowing the calibration of the positioning system. That is to say that this device is specially configured to carry out in a simple, precise and reliable way this optimization step comprising a comparison of the positioning determined by the RTLS system from the signals with a positioning determined by a means of determining the position which is proper to the device in question. This proper means having the capacity to know precisely the physical position of the points where the RTLS measurements are made.

A first aspect of the present disclosure is a ground truth coordinate collection device configured to assist in the optimization of a real-time location system, RTLS, based on the reception of signals from fixed signal transmitters, the device comprising: signal measuring means configured to measure a plurality of signals from fixed signal transmitters at a time t and obtain corresponding signal information therefrom at the time t; and signal measuring means position determining means configured to determine a physical position of the signal measuring means at the time t and obtain signal measuring means position information therefrom in a coordinate system specific to the collection device at the time t ; the device being configured to autonomously obtain a series of signal information and a corresponding series of position information of the signal measuring means, the series of position information of the signal measuring means comprising at least two information corresponding to at least two different physical positions of the signal measuring means.

An implementation of the first aspect is a ground truth coordinate collection device further comprising: a communication means, configured to send the set of signal measurement information and the set of corresponding measurement means position information to an external device.

An implementation of the first aspect is a ground truth coordinate collection device wherein: the signal measuring means comprises at least two signal sensors each configured to measure a plurality of signals from fixed signal transmitters at a time t and obtain signal information therefrom, the set of signal information comprising the at least two signal information thus obtained; and the position determining means of the signal measuring means is configured to determine the physical positions of the two signal sensors at the time t, the set of position information of the signal measuring means comprising the physical positions of the two signal sensors.

An implementation of the first aspect is a ground truth coordinate collection device in which the at least two signal sensors are fixed in the reference frame of the collection device; and the position determining means of the signal measuring means is configured to determine the physical position of the two signal sensors from preset position information of the at least two fixed sensors.

An implementation of the first aspect is a ground truth coordinate collection device further comprising an accordion rack structure configured to be stretchable in one direction; the at least two signal sensors are attached to the accordion rack structure at different points so as to vary their relative positions as the accordion rack structure is stretched; and the position determining means of the signal measuring means includes at least one angle sensor positioned on the accordion rack structure, and the physical positions of the at least two signal sensors are determined based on angle information obtained by the angle sensor.

An implementation of the first aspect is a ground truth coordinate collection device, the device further comprising a mobile apparatus, the mobile apparatus is configured to move autonomously, the mobile apparatus comprises signal measuring means and signal measuring means position determining means; and the signal measuring means position determining means comprises a position sensor configured to determine a position of the mobile apparatus in the frame of reference of the collection device; the device being further configured to obtain the set of signal information and the corresponding set of position information of the signal measuring means by moving the mobile apparatus, and by obtaining signal information and position information of the signal measuring means for at least two different times t corresponding to different physical positions of the signal measuring means.

An implementation of the first aspect is a ground truth coordinate collection device wherein the signal measuring means comprises at least one signal sensor located on a movable attachment of the movable apparatus; and the means for determining the position of the signal measuring means is further configured to determine the position of the signal sensor in the frame of reference of the movable apparatus.

An implementation of the first aspect is a ground truth coordinate collection device wherein: the device further comprises a rail, the mobile device is configured to move on the rail; and the position sensor is configured to determine its position relative to the rail, when the mobile device is in position on the rail).

An implementation of the first aspect is a ground truth coordinate collection device wherein: the device further comprises a tape measure, the position sensor is configured to determine its position relative to the tape measure, when the mobile device is in position in proximity to the tape measure.

An implementation of the first aspect is a ground truth coordinate collection device further comprising: a first tripod-like structure; a second structure comprising one or more extension rods is mounted to the first structure; a motor configured to rotate the second structure about a vertical axis; the signal measuring means comprises one or more signal sensors each mounted to one of the one or more extension rods of the second structure; the position determining means of the signal measuring means is configured to determine the position of the one or more signal sensors in the frame of reference of the first tripod-like structure; the device being further configured to obtain the series of signal information and the corresponding series of position information of the signal measuring means by rotating the second structure around the vertical axis by means of the motor, and by obtaining signal information and position information of the signal measuring means for at least two different times t corresponding to different physical positions of the one or more signal sensors.

An implementation of the first aspect is a ground truth coordinate collection device further comprising: an lift mounted on the first tripod-like structure; the second structure comprising one or more extension rods is mounted on the lift; the device is further configured to obtain the set of signal information and the set of position information of the corresponding signal measuring means by vertically moving the lift.

An implementation of the first aspect is a ground truth coordinate collection device wherein: the signal measuring means is configured to measure a plurality of signals from fixed signal transmitters using Ultra Wide Band technology.

A second aspect of the present disclosure is a system for assisting in the optimization of a real time location system, RTLS, based on the reception of signals from fixed signal transmitters, comprising a collection device according to the first aspect of the disclosure; a plurality of RTLS anchors; a high level system configured to receive from the collection device and use the set of signal information and the set of position information of the corresponding signal measurement means to modify RTLS parameters

A third aspect of the present disclosure is a method of optimizing a real-time location system, RTLS, based on receiving signals from fixed signal transmitters, the method comprising: obtaining, by means of a ground truth coordinate collection device according to the first aspect of the disclosure, a set of signal information and a corresponding set of signal measurement means position information, the set of signal measurement means position information comprising at least two pieces of information corresponding to at least two different physical measurement positions.

An implementation of the third aspect is a method of optimizing a real-time location system, RTLS, the method further comprising: receiving, by the high level system, the set of signal information and the set of position information from the corresponding signal measurement means; using, by the high level system, the set of signal information and the set of position information from the corresponding signal measurement means to modify RTLS parameters.

Advantageous configurations and developments emerge from the further dependent claims and from the description with reference to the figures of the drawings.

Where appropriate, the above-mentioned configurations and developments can be combined in any manner. Further possible configurations, developments and implementations of the disclosure also include combinations, which are not explicitly mentioned, of features of the disclosure which have been described previously or are described in the following with reference to the embodiments. In particular, in this case, a person skilled in the art will also add individual aspects as improvements or supplements to the basic form of the present disclosure.

The present disclosure is described in greater detail in the following on the basis of the embodiments shown in the schematic figures of the drawings, in which:
- Fig. 1: illustrates the general concept of the ground truth coordinate collection device following this disclosure;
- Fig. 2: is an embodiment of a first form of collection device according to the present disclosure;
- Fig. 3: illustrates a collection device of a first form comprising attachment points on its frame;
- Fig. 4: is a representation of a second form of collection device according to the present disclosure;
- Fig. 5: is an embodiment of a third form of collection device according to the present disclosure;
- Fig. 6: is a representation of a fourth form of collection device according to the present disclosure;
- Fig. 7: is a representation of a fifth form of collection device according to the present disclosure;
- Fig. 8: represents a system using one of the collection devices as shown;
- Fig. 9: represents an application example of a method for calibrating an RTLS system.

The appended drawings are intended to provide further understanding of the embodiments of the disclosure. They illustrate embodiments and, in conjunction with the description, help to explain principles and concepts of the disclosure. Other embodiments and many of the advantages mentioned become apparent in view of the drawings. The elements in the drawings are not necessarily shown to scale.

In the drawings, like, functionally equivalent and identically operating elements, features and components are provided with like reference signs in each case, unless stated otherwise.

Hereinafter, the embodiments will now be described in detail with reference to the accompanying drawings. However, the disclosure cannot be limited to the embodiment in which the idea of the disclosure is presented, and another embodiment included within range of idea of another backward disclosure, or the present disclosure may be easily proposed by addition, change, deletion and the like of another element.

The terms used in this specification were selected to include current, widely-used general terms. In certain cases, a term may be one that was arbitrarily established by the applicant. In such cases, the meaning of the term will be defined in the relevant portion of the detailed description. As such, the terms used in the specification are not to be defined simply by the name of the terms but are to be defined based on the meanings of the terms as well as the overall description of the present disclosure.

Hereinafter, embodiments of the present disclosure will be described in detail with reference to the accompanying drawings. It should be noted that the same reference numerals are used to designate the same or similar elements throughout the drawings.

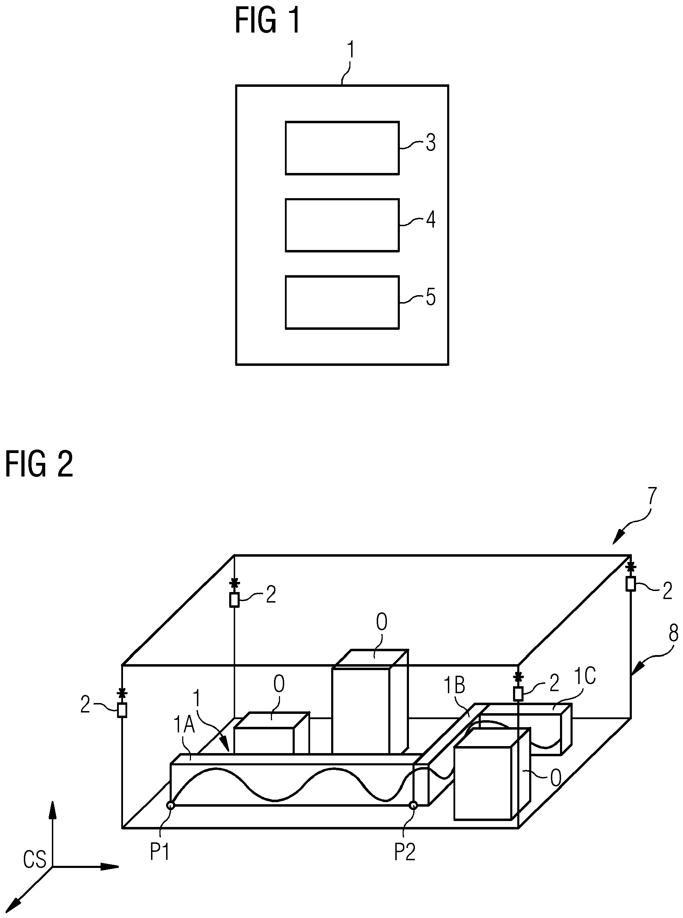

The purpose of the present detailed description is to present several approaches of devices for collecting ground truth information allowing to calibrate and optimize the positioning system. This approach being particularly adapted to closed or indoor environments. As illustrated in Fig. 1, the ground truth coordinates collection device 1 is configured to assist in the optimization of a positioning system based on the reception of signals from fixed signal transmitters 2 such as RTLS anchors 2. The collection device 1 comprises a signal measuring means 3, configured to measure a plurality of signals from fixed signal transmitters 2 at a time t and obtain corresponding signal information at the time t. The collection device 1 also comprises a signal measuring means position determining means 4, configured to determine a physical position of the signal measuring means 3 at time t and obtain therefrom position information of the signal measuring means in a coordinate system specific to the collection device 1 at time t. Each of the presented forms of collection devices 1 is configured to autonomously obtain a series of signal information and a corresponding series of position information of the signal measuring means, the series of position information of the signal measuring means comprising at least two information corresponding to at least two different physical positions of the measuring means. Indeed, the whole point of these collection devices 1 is to provide a solution for carrying out a campaign of measuring points in an autonomous way without a user having to move the signal measuring means 3 himself and to check manually the determination of the position of the signal measuring means.

The collection device 1 may also include a communication means 5 configured to send the set of signal measurement information and the corresponding set of measurement means position information to an external device. The signal measurement means to comprise one or more signal sensors 6 which may take the form of RTLS tags. The RTLS system used can be based on Ultra-Wide Band (UWB).

Fig. 2 is a representation of a first form of collection device 1 and its use in the environment in which the location solution is to be deployed. This environment is represented by a deployment area 7, which in this illustration has the shape of a cuboid 8. This area may include a number of obstacles O. In the illustration, the deployment area 7 has been equipped with four RTLS anchors 2 belonging to it, which have been deployed at fixed positions and measured relative to each other, in order to define a local coordinate system CS. Obviously, a different number of RTLS anchors 2 can be arranged in the deployment area 7. Two reference points P1 and P2 are determined and measured in the local coordinate system CS.

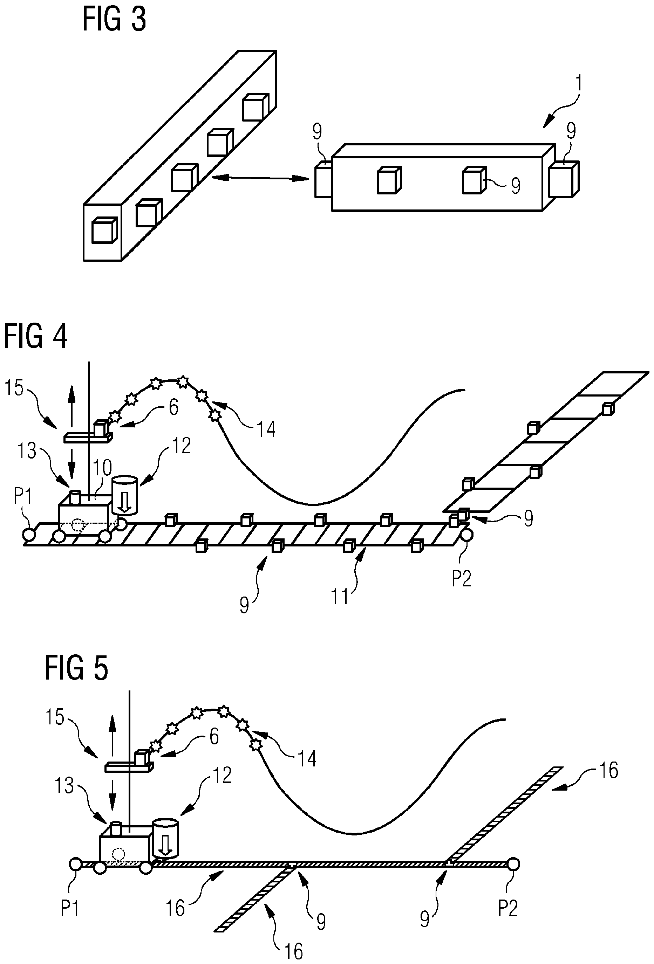

A collection device 1 according to the present invention may be deployed in the deployment area 7 to collect ground truth data. This deployment can be done by deploying the collection device 1 with reference to the reference points P1 and P1. The collection device 1 may be in the form of, for example, a fixed frame comprising a signal measuring means 3 in the form of several signal sensors 6 positioned on this frame at known positions. These signal sensors 6 can measure a plurality of signals from the RTLS anchors 2 at a time t and obtain corresponding signal information at time t. The signal sensors 6 are positioned at known fixed positions. A means for determining the position of the signal sensors may comprise a computing unit 5 that generates, in parallel to the signal information at time t, position information of the signal measurement sensors in a coordinate frame of reference related to the collection device 1. Alternatively, each sensor can also generate its position information, for example in the form of a location annotation on the measurement it is making. Thus, each measurement made by a sensor can be accompanied by precise information about the position of this measurement in the reference frame of the collection device 1. As the position of the collection device 1 is known thanks to its deployment at the reference points P1 and P2, the relationship between the coordinates in the reference frame of the collection device and the one in the local coordinate frame CS is easy to determine and the different positioning data can be easily obtained in the local coordinate frame CS. At least two measurements are required to obtain a useful set of measurements, however, the more signal sensors 6 the collection device 1 comprises, the easier it will be to carry out a measurement campaign in space without having to relocate the collection device 1. Ideally, this plurality of signal sensors 6 will be positioned at different heights and lengths on the frame, so as to form a kind of mesh. The collection device 1 may further comprise attachment points 9 on its armature as illustrated in Figure 3. In this way, several collection devices 1 can be assembled in order to easily make a mesh of an area without having to relocate a single collection device 1. It is to be noted that the fixation is made in a firm way so that the structure constituted by the assembly of several collection devices 1 is a stable structure whose references remain fixed with respect to the local coordinate system CS. This approach is illustrated in Figure 2 by the collection devices 1A, 1B and 1C which are fixed to each other in order to form a measurement path. Since the coordinates of the attachment points 9 are known, the coordinates of each signal sensor 5 in each of the collection devices 1 can therefore be easily defined within the local coordinate system CS.

Once deployed, the collection device 1 is able to measure RTLS signals (e.g., Channel Impulse Response (CIR) or the Preamble Symbol Accumulation (PSA)) at different measurement points whose coordinates will be known in the local coordinate system CS.

Once collected, the measurement points with their coordinates in the CS reference frame are used as ground truth values for the calibration of the RTLS system.

Fig. 4 is a representation of a second form of collection device 1 and its use. In this example, the collection device 1 comprises a mobile apparatus 10 and a rail 11. The rail 11 may be positioned in a space similar to that shown in Fig. 2 by extending between reference points P1 and P2. It should be noted that this rail 11 can be equipped with fixing points 9 as in the previous example so that two sets of rails can be connected to each other in a fixed manner to create a solid and firm structure that can be positioned in the deployment area 7 in order to perform the measurement campaign. The mobile device 10 may take the form of a platform configured to move along the rail 11. For example, the mobile device 10 may be a platform having a system that positions itself on the rail so that the platform can move in translation along the rail 11. The mobile device 10 is further equipped with a position sensor 12 configured to determine a position of the mobile device in the coordinate frame of the collection device 1. More specifically, the position sensor 12 may be configured to determine the relative position of the mobile device on the rail. This position sensor may be, for example, a camera that determines the position on the rail by means of image recognition performed with the aid of a computing unit 13 present on the mobile device 10 and aided in this by visible and easily recognizable markings positioned on the rail 11.

The mobile device 10 comprises a signal measuring means 3, comprising one or more signal sensors 6, which enables the signals from the RTLS anchors 2 positioned in the deployment area 7 to be measured. The measurement will thus be made by autonomously moving the mobile device 10 along the rail 11 so that measurements can be taken at time intervals t=1 to N, where N is an integer greater than or equal to 2. In this way, measurement points 14 can be obtained for which signal information and position information of the signal measuring means 3 are available.

The signal sensor(s) 6 may also be positioned on a movable fixture of the mobile device 10, so that the signal sensor(s) 6 is/are movable relative to a reference frame of the mobile device 10. For example, the movable attachment may be a height-movable lift 15 on which the signal sensor(s) 6 may be positioned as shown in Fig. 4. Thus, it will be possible to vary the height of a signal sensor 6 when taking measurements. By combining the movement of the mobile device 10 along the rail 11 and the movement of the lift 15, it is possible to make a series of measurement points 14 on a well-defined curve in the cuboid 8 representing the deployment area 7. In addition, the possibility of constructing an assembly of several rails makes it possible to extend this curve as far as desired.

Fig. 5 is a representation of a third form of collection device 1 and its use. This approach is based on a mobile device 10 similar to the one shown in Fig. 4 except that the device as a whole here does not have a rail 11 and thus the configuration elements of the mobile device 10 corresponding to this rail are not present here. In this example, the mobile device 10 does not move on a rail but moves along a path that is marked by a measuring tape 16 that is fixed to the ground and spatially referenced by alignment with reference points P1 and P2. Here, the position sensor 12 in the form of a camera determines the position of the mobile device 10 on the measuring tape 16 by means of an image recognition that is performed by a computing unit 13 of the mobile device 10. This image recognition can also be facilitated by recognizable visual signs on the measuring tape 16. Similar to the rail 11 presented above, two measuring tapes 16 can be docked using a fixation point 9 which can have a visual marker that indicates a direction/angle of the extension path. With the current position and the specified angle on the marker, the positions of the extension path can be determined in a simple way.

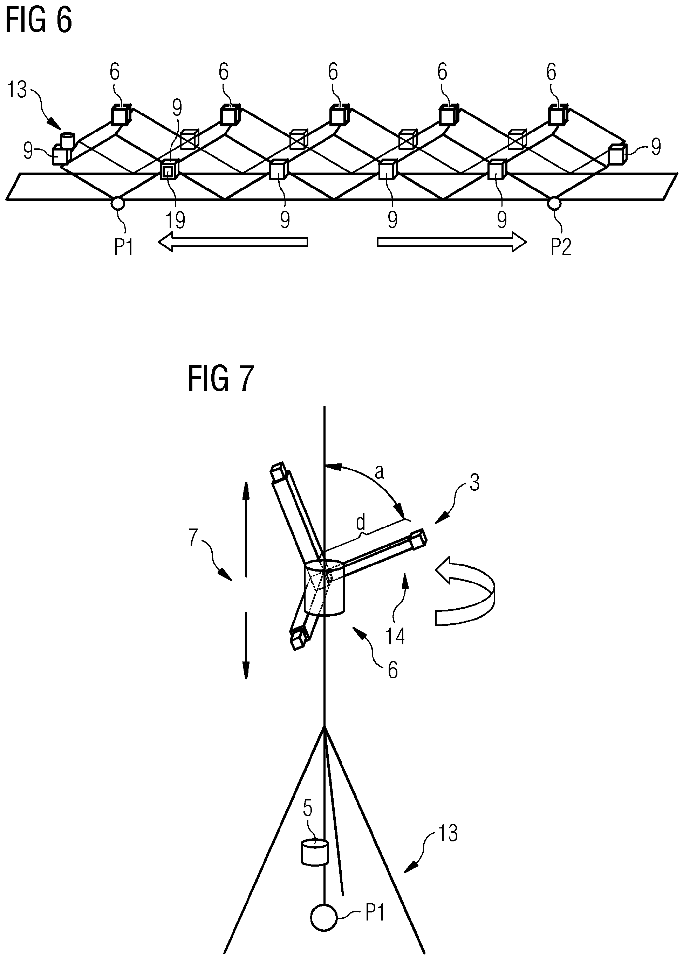

Fig. 6 and a representation of a fourth form of collection device 1 and its use. This approach is based on the use of a structure 17 comparable to an accordion rack. This structure can be a metal structure. This structure has the feature that it can be extended or shortened in a certain direction 18. Thus, the structure 17 is particularly well adapted to obtain a desired length connecting for example reference points P1 and P2, while being particularly portable once folded. On the upper part of the structure, where there are stabilizing bars, signal sensors 6 can be mounted. The sliding points of the structure 17 can be equipped with fixing points 9 which can be used to fix two accordion rack structures together. At the location of one of the fastening points 9 there is an angle sensor 19 which allows to measure the angle formed by the rods of the rack accordion structure 17. The position of the measuring points can be referenced in space by determining the length of the structure, which in turn can be calculated using the angle measured by the angle sensor 19 positioned at a sliding point by the fact that the length of the rods is known. Such an angle sensor 19 can be for example a magneto-resistance sensor which will be connected to a calculation unit 13 positioned on the accordion rack structure.

Fig. 7 illustrates a fifth form of collection device 1 and its operation. In this example, the collection device 1 is based on a first structure in the form of a tripod 20 which may be made of metal. This first structure carrying a lift 15 on which one or more signal sensors 6 belonging to a signal measuring means 3 are mounted on a second structure 21 comprising one or more extension rods 22 (for example one rod for each signal sensor 6). The second structure 21 can be rotated by means of a motor 23. In this approach, the signal sensors 6 are spatially referenced with respect to alignment with the reference point P1 and a known distance d of the sensor from the center of the second structure. A signal sensor 6 is positioned on a rod 22 at an angle a to the vertical axis of the tripod structure 20.

The signal sensor(s) 6 mounted on the second structure 21 comprising extension rods 22 collects signal measurements that are spatially referenced based on the distances d, the height of the lift 7, and the angle of rotation. This angle of rotation can be obtained by a position sensor connected to a calculation unit 13 which will perform the calculation. A measurement campaign can thus be carried out easily and quickly by positioning the first structure 20 at different reference points PX in the deployment area 7. The result of the measurement will thus correspond to a cloud of points placed inside the cuboid 8.

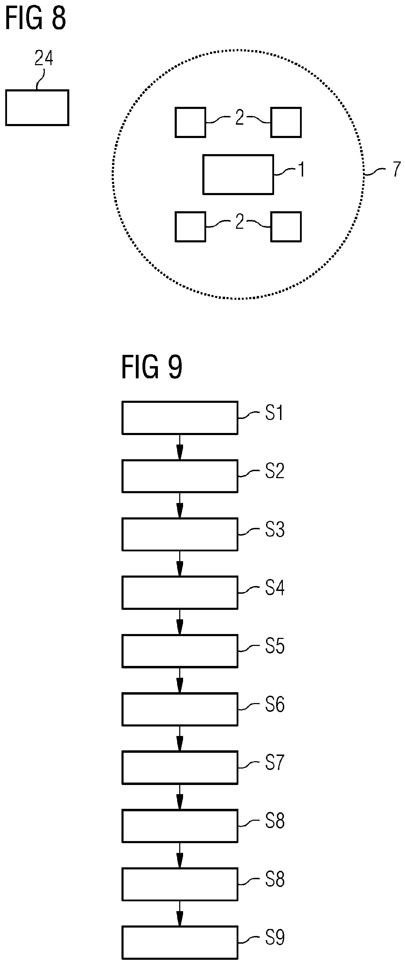

Fig. 8 shows a system using one of the collection devices as shown. The system includes four RTLS anchors 2 and a collection device 1 of the type previously shown that are located in a deployment area 7. The system also includes high level system 24 connected to a communication means 5 of the collection device 1, or/and to a computing unit 15 of a mobile device 10 of the collection device 1. The high-level system 24 is connected to the collection device one so that the set of signal information and the set of position information of the corresponding signal measuring means obtained by the collection device one can be provided to it.

Fig. 9 represents an application example of a method for calibrating an RTLS system. In a first step (S1), a user such as an engineer builds up and connects the RTLS anchors 2 in a target building. In a second step (S2), he configures the RTLS anchors (e.g., time synchronization). In a third step (S3), he configures multiple tags or signal sensors 6. In a fourth step (S4), he creates a local coordinate system CS, by taking one of the RTLS anchors 2 as the origin and measuring distances to the other RTLS anchors 2. The derived coordinates for each RTLS anchor are stored in a high-level system 24. In a fifth step (S5), further measures two reference points P1 and P2. In a sixth step (S6), the engineer deploys a collection device 1, according to a presented embodiment, aligned with the two reference points P1 and P2. In a seventh step (S7), he may extend one device with multiple others to cover a larger spatial extent as presented above, for instance by fixing rails together, by using the docking mechanism through fixture points. In an eight step (S8), he connects from the high-level system to communication means 5 or the compute unit 13 of the collection device 1, starts the collection of data, which could follow the following data structure:
{Ground truth coordinates: (x, y, z)
RTLS measurements: CIR, PSA, ...
RTLS-derived coordinates: (x', y', z')}

In a ninth step (S9), the system automatically compares the ground truth coordinates with the RTLS-derived coordinates and deducts an error. In a tenth step (S10), the system automatically fine-tunes the configuration parameters of the RTLS by adjusting them to minimize the error. The system goes back to the ninth step (S9), and if an error cannot be further minimized, then system complete the method.

Although the present disclosure has been described in the above by way of preferred embodiments, it is not limited thereto, but rather can be modified in a wide range of ways. In particular, the disclosure can be changed or modified in various ways without deviating from the core of the disclosure.

## Claims

1. A ground truth coordinate collection device (1) configured to assist in the optimization of a real-time location system, RTLS, based on the reception of signals from fixed signal transmitters (2), the device comprising:
- signal measuring means (3), configured to measure a plurality of signals from fixed signal transmitters (2) at a time t and to obtain corresponding signal information at the time t; and
- a means for determining the position of the signal measuring means (4), configured to determine a physical position of the signal measuring means (3) at the time t and to obtain therefrom positional information of the signal measuring means in a coordinate system specific to the collection device (1) at the time t;
the device (1) being configured to autonomously obtain a set of signal information and a corresponding set of signal measuring means position information, the set of signal measuring means position information comprising at least two pieces of information corresponding to at least two different physical positions of the signal measuring means (3).

2. The ground truth coordinate collection device (1) of claim 1, the device further comprising:
- a communication means (5), configured to send to an external device (24) the set of signal measurement information and the set of position information of the corresponding measurement means.

3. The ground truth coordinate collection device (1) of any of claims 1 or 2, wherein:
- the signal measuring means (3) comprises at least two signal sensors (6) each configured to measure a plurality of signals from fixed signal transmitters (2) at a time t and to obtain signal information therefrom, the set of signal information comprising the at least two signal information thus obtained; and
- the position determining means of the signal measuring means (4) is configured to determine the physical positions of the two signal sensors (6) at time t, the position information set of the signal measuring means comprising the physical positions of the two signal sensors (6) .

4. The ground truth coordinate collection device (1) of claim 3, wherein:
- the at least two signal sensors (6) are fixed in the reference frame of the collection device (1); and
- the position determining means of the signal measuring means (4) is configured to determine the physical position of the two signal sensors (6) from a preset position information of the at least two fixed sensors (6).

5. The ground truth coordinate collection device (1) according to claim 3, the device further comprising an accordion rack structure (17) configured to be stretchable in one direction (18);
- the at least two signal sensors (6) are attached to the accordion rack structure (17) at different points so as to vary their relative positions as the accordion rack structure (17) is stretched; and
- the position determining means of the signal measuring means (3) comprises at least one angle sensor (19) positioned on the accordion rack structure (17), and the physical positions of the at least two signal sensors (6) are determined on the basis of angle information obtained by the angle sensor (19).

6. A ground truth coordinate collection device (1) according to one of claims 1 or 2,
- the device (1) further comprising a mobile apparatus (10),
o the mobile device (10) is configured to move autonomously,
o the mobile apparatus (10) comprises the signal measuring means (3) and the means for determining the position of the signal measuring means (4); and
o the position determining means of the signal measuring means (4) comprises a position sensor (12) configured to determine a position of the mobile device (10) in the coordinate system specific to the collection device (1);
- the device (1) being further configured to obtain the series of signal information and the corresponding series of position information of the signal measuring means by moving the mobile apparatus (10), and by obtaining signal information and position information of the signal measuring means for at least two different times t corresponding to different physical positions of the signal measuring means (3).

7. The ground truth coordinate collection device (1) of claim 6, wherein:
- the signal measuring means (3) comprises at least one signal sensor (6) placed on a mobile attachment of the mobile device; and
- the position determining means of the signal measuring means (4) is further configured to determine the position of the signal sensor (6) in a coordinate system specific to the mobile apparatus (10).

8. The ground truth coordinate collection device (1) according to any of claims 6 or 7, wherein:
- the device (1) further comprises a rail (11),
- the mobile device (10) is configured to move on the rail (11); and
- the position sensor (12) is configured to determine its position relative to the rail (11), when the mobile device (10) is in position on the rail (11).

9. The ground truth coordinate collection device (1) of any of claims 6 or 7, wherein:
- the device (1) further comprises a measuring tape (16),
- the position sensor (12) is configured to determine its position relative to the measuring tape (16), when the movable device (10) is in position near the measuring tape (16).

10. The ground truth coordinate collection device (1) of any of claims 1 or 2, the device further comprising:
- a first structure (20) in the shape of a tripod;
- a second structure (21) comprising one or more extension rods (22) is mounted on the first structure (20);
- a motor (23) configured to rotate the second structure (21) about a vertical axis; and
the signal measuring means (3) comprises one or more signal sensors (6) each mounted on one of the one or more extension rods (22) of the second structure (21);
the position determining means of the signal measuring means (4) is configured to determine the position of the signal sensors (6) in the reference frame of the first tripod structure (20);
the device (1) being further configured to obtain the series of signal information and the series of position information of the corresponding signal measuring means by rotating the second structure (21) around the vertical axis by means of the motor (23), and by obtaining signal information and position information of the signal measuring means for at least two different times t corresponding to different physical positions of the signal sensors (6).

11. The ground truth coordinate collection device (1) of claim 10, the device further comprising:
- an lift (15) mounted on the first tripod structure (20);
- the second structure (21) comprising one or more extension rods (22) is mounted on the lift;
the device is further configured to obtain the set of signal information and the set of position information from the corresponding signal measuring means by vertically moving the lift (15).

12. A ground truth coordinate collection device (1) according to any of the preceding claims, wherein:
- the signal measuring means (3) is configured to measure a plurality of signals from fixed signal transmitters (2) using Ultra Wide Band technology.

13. A system for assisting in the optimization of a real time location system, RTLS, based on the reception of signals from fixed signal transmitters (2), comprising:
- a collection device (1) according to any of the preceding claims;
- several RTLS anchors (2);
- a high-level system (24) configured to receive from the collection device (1) and use the set of signal information and the set of position information from the corresponding signal measurement means to modify RTLS parameters.

14. A method for optimizing a real-time location system, RTLS, based on receiving signals from fixed signal transmitters (2), the method comprising:
- obtaining, by means of a ground truth coordinate collection device (1) according to any one of claims 1 to 12, a set of signal information and a corresponding set of signal measurement means position information, the set of signal measurement means position information comprising at least two pieces of information corresponding to at least two different physical measurement positions.

15. A method for optimizing a real-time location system, RTLS, the method further comprising:
- to receive, by the high-level system (24), the series of signal information and the series of position information from the corresponding signal measuring means;
- using, by the high-level system (24), the set of signal information and the set of position information of the corresponding signal measuring means to modify RTLS parameters.
